# EUROPEAN PATENT APPLICATION

(11) **EP 3 450 891 A1**
(43) Date of publication of application: **06.03.2019**
(21) Application number: 16902796.8
(22) Date of filing: 29.06.2016
(51) Int. Cl.: F25D 23/02

(54) **DOOR SEAL AND REFRIGERATION CONTAINER HAVING SAME**

(30) Priority: 26.05.2016 CN 201610379292
(71) Applicant: Hefei Hualing Co., Ltd., Hefei, Anhui 230601 (CN); Midea Group Co., Ltd., Foshan, Guangdong 528311 (CN)
(72) Inventor: GUO, Jun, Hefei Anhui 230601 (CN); SHEN, Jian, Hefei Anhui 230601 (CN); LI, Longfei, Hefei Anhui 230601 (CN); YU, Hao, Hefei Anhui 230601 (CN)
(74) Representative: RGTH
(86) International application number: PCT/CN2016/087549
(87) International publication number: WO 2017/201808

(57) **Abstract**

Provided are a door seal and a refrigeration container having the door seal. The door seal comprises a sealing air chamber portion (10) and a latching tongue portion (20). The latching tongue portion (20) is used to be connected to the door body. The latching tongue portion (20) comprises a barb (201) and a fixed plate (202) for connecting the barb (201) with the sealing air chamber portion (10). The sealing air chamber portion (10) is connected to the fixed plate (202) through a connection portion (30), and a gap is formed between the sealing air chamber portion (10) and the fixed plate (202). Several through holes (40) are provided on the fixed plate (202) at a position between the barb (201) and the connection portion (30). The through holes (40) are arranged on the fixed plate (202) without affecting the appearance, and when the door body is closed, the through holes (40) are pressed and blocked by the sealing air chamber portion (10) without affecting the sealing. Therefore, the size of the through holes (40) can be arranged in a large size as required, so as to achieve a good air conduction effect, so that the air can enter the cabinet instantaneously when the door body is opened, thereby shortening the time for opening the door body and improving the experience for the user.

## Description

### FIELD OF TECHNOLOGY

The present disclosure relates to the technical filed of door body sealing of the refrigerator, and particularly to a door seal and a refrigeration container having the door seal.

### BACKGROUND

The refrigerator door needs to be opened frequently. In order to ensure the sealing of the refrigerator and prevent the refrigerator door from being closed insufficiently tightly, which leads to a cold leak of the refrigerator, a door seal is arranged on a contact surface between a door body of the refrigerator and a cabinet shell, so as to achieve the sealing. The door seal is provided with a sealing air chamber and a latching tongue. The door seal is fixed on the door body by the clamping of the latching tongue with a liner of the door body, and the door body is sealed with the sealing air chamber.

When closing the refrigerator door body, the sealing air chamber of the door seal is deformed by the pressure, so that when opening the door body, it is needed to overcome certain negative pressure to turn the sealing air chamber into a stretched state from a compressed state. In order to open the refrigerator door body successfully, through holes are arranged on the right and left sides of a main air chamber of the sealing air chamber in the prior art, for allowing the air to enter the cabinet of the refrigerator through the through holes when the door body is opened, so as to balance the pressures inside and outside the cabinet, thereby facilitating the opening of the door body. Since the through holes are provided on the main air chamber, the diameter of a through hole, which is typically set to 3 mm, cannot be too large in the interest of ensuring the sealing, otherwise the appearance will be affected, and negative effects such as cold leak and frosting will occur. Meanwhile, a through hole with a small diameter cannot conduct the air well, and therefore a large opening force is required when opening the refrigerator door body.

### SUMMARY

### (I) Technical problem to be solved

The present disclosure provides a door seal and a refrigeration container having the door seal, so as to solve the problem that the existing door seal has through holes provided at both sides of the main air chamber, which leads to a large force for opening the door body.

### (II) Technical solutions

In order to solve the technical problem above, the present disclosure provides a door seal, including a sealing air chamber portion and a latching tongue portion; wherein the latching tongue portion is configured to be connected to the door body, and includes a barb and a fixed plate for connecting the barb with the sealing air chamber portion; the sealing air chamber portion is connected to the fixed plate through a connection portion, and a gap is formed between the sealing air chamber portion and the fixed plate; and several through holes are provided on the fixed plate at a position between the barb and the connection portion.

According to the present disclosure, the connection portion is at a position close to a side wall of the sealing air chamber portion.

According to the present disclosure, the through hole is elongated or U-shaped.

According to the present disclosure, the through hole has a maximal inner diameter of 20-60 mm.

According to the present disclosure, one end of the fixed plate is provided with a fin formed by bending an end portion of the fixed plate toward one side of the barb.

According to the present disclosure, a side wall of the sealing air chamber portion extends in a direction away from the fixed plate with a blade edge.

According to the present disclosure, the sealing air chamber portion includes an inner air chamber and outer air chambers at both sides of the inner air chamber; and a plurality of support ribs is arranged within the inner air chamber and the side air chamber respectively.

According to the present disclosure, the sealing air chamber portion further includes an ear-shaped air chamber provided outside the outer air chamber, and an outer side surface of the ear-shaped air chamber is an arc surface.

The present disclosure also provides a refrigeration container having the door seal as described above

### (III) Advantageous effects

The door seal and the refrigeration container having the same provided by the above-described technical solutions of the present disclosure have the following merits:
The fixed plate is connected to the sealing air chamber portion through the connection portion, a gap is formed between the fixed plate and the sealing air chamber portion, and the through holes are provided on the fixed plate at the position between the barb and the connection portion, and therefore when the door body is closed, the sealing air bag portion of the door seal is pressed and deformed to press against the fixed plate, and the through holes on the fixed plate are blocked, so that the sealing effect is not affected; when opening the door body, the sealing air chamber portion is separated from the fixed plate by the movement of the door body under the negative pressure, so that the air can enter the cabinet via the through holes in the fixed plate and the gap between the fixed plate and the sealing air chamber portion, which balances the pressures inside and outside the cabinet, and thus the door body can be easily opened. Since the through holes are arranged on the fixed plate without affecting the appearance, and the through holes are pressed and blocked by the sealing air chamber portion without affecting the sealing when the door body is closed, the size of the through holes can be set to a large size as required, so as to achieve a good air conduction effect, so that the air can enter the cabinet instantaneously when the door body is opening, and thereby shortening the time for opening the door body and improving the experience for the user.

### BRIEF DESCRIPTION OF THE DRAWINGS

FIG.1 is a 3-D structural diagram of a door seal of an embodiment of the present disclosure; and
FIG.2 is a front view of a door seal of an embodiment of the present disclosure.

In the drawings: 10: sealing air chamber portion; 101: blade edge; 102: inner air chamber; 103: outer air chamber; 2021, 1031: support rib; 104: ear-shaped air chamber; 20: latching tongue portion; 201: barb; 202: fixed plate; 2021: fin; 30: connection portion; 40: through hole.

### DETAILED DESCRIPTION

In order to make the objectives, technical solutions, and advantages of the embodiments of the present disclosure clearer, the technical solutions of the embodiments of the present disclosure will be described clearly and fully with reference to the accompanying drawings hereinafter. Obviously, the described embodiments are merely some of but not all of the embodiments of the present disclosure. On the basis of the embodiments of the present disclosure, all other embodiments obtained by the person of ordinary skill in the art without creative work shall fall within the protection scope of the present disclosure.

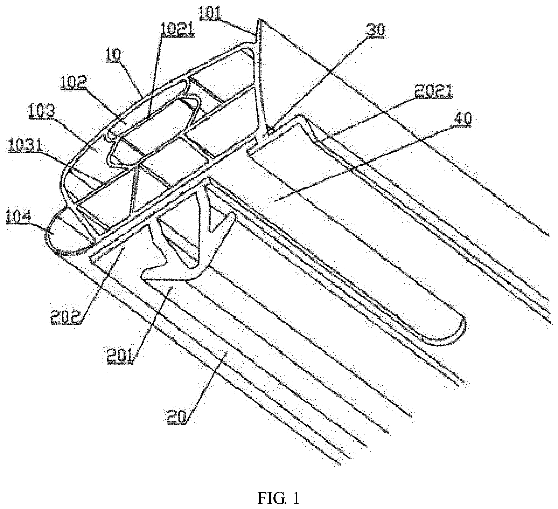

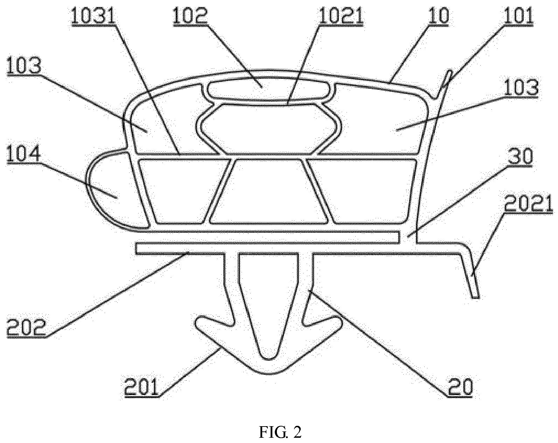

FIG.1 and FIG.2 show an embodiment of a door seal of the present disclosure. The door seal of the present disclosure includes a sealing air chamber portion 10 and a latching tongue portion 20. The latching tongue portion 20 is arranged below the sealing air chamber portion 10. The latching tongue portion 20 is configured to be connected to a door body, and includes a barb 201 and a fixed plate 202. The barb 201 can be fixed to a clamping groove arranged on a liner of the door body by clamping, and the fixed plate 202 is configured to connect the barb 201 with the sealing air chamber portion 10 so as to fix the sealing air chamber portion 10 on the door body. The sealing air chamber portion 10 is connected to the fixed plate 202 through a connection portion 30, and there is a gap between the sealing air chamber portion 10 and the fixed plate 202. Through holes 40 are provided on the fixed plate 202 at a position between the barb 201 and the connection portion 30, that is, the through holes 40 are provided on the fixed plate 202 at a position close to the connection portion 30. One or more through holes 40 may be provided, and the number of the through holes 40 is preferred to be one to five. The through holes 40 are configured to allow the air to enter a cabinet connected to the door body through the through holes 40 when the door body is opening, so as to balance the pressures inside and outside the cabinet, thereby facilitating the opening of the door body. It should be noted that, "left", "right", "upper" and "lower" herein refer to the orientation of the door seal of the present embodiment when it is placed as shown in FIG.2.

By connecting the fixed plate 202 with the sealing air chamber portion 10 through the connection portion 30, the door seal of the present embodiment forms a gap between the fixed plate 202 and the sealing air chamber portion 10, and the through holes 40 are provided on the fixed plate 202 at the position between the barb 201 and the connection portion 30, and therefore when the door body is closed, the sealing air bag portion 10 of the door seal is pressed and deformed to press against the fixed plate 202, and the through holes 40 on the fixed plate 202 are blocked, so that the sealing effect is not affected; when the door body is opening, the sealing air chamber portion 10 is separated from the fixed plate 202 by the movement of the door body under the negative pressure, so that the air can enter the cabinet via the through holes 40 in the fixed plate 202 and the gap between the fixed plate 202 and the sealing air chamber portion 10, which balances the pressures inside and outside the cabinet, and thus the door body can be easily opened. The through holes 40 are arranged on the fixed plate 202 without affecting the appearance, and when the door body is closed, the through holes 40 are pressed and blocked by the sealing air chamber portion 10 without affecting the sealing. Therefore, the size of the through holes 40 can be set to a large size as required, so as to achieve a good air conduction effect, so that the air can enter the cabinet instantaneously when the door body is opened, thereby shortening the time for opening the door body and improving the experience for the user.

Further, in the present embodiment, the connection portion 30 is at a position close to a side wall of the sealing air chamber portion 10. Preferably, the connection portion 30 extends from a lower surface of the sealing air chamber portion 10 toward the fixed plate 202 by a right side wall of the sealing air chamber portion 10. Therefore, the connection portion 30 and the fixed plate 202 constitute an L-shaped connection structure, so that when the door body is opened, the opening force is transmitted only from the latching tongue portion 20 to a side of the sealing air chamber portion 10 via the connection portion 30, thereby significantly shortening the transmission path of the opening force. And when the door body is opened, the door seal is split from the forced side of the sealing air chamber portion 10, thereby reducing the stroke of the sealing air chamber portion 10 for overcoming the negative pressure from a compressed state to a stretched state when the door body is opened, and the opening force required by opening the door body is reduced. Therefore the time for opening the door body is shortened and the experience of the user is improved.

Further, in the present embodiment, the through holes 40 may be elongated or U-shaped, and one through hole 40 may be provided, or two to five through holes 40 may also be provided at intervals along a length direction of the door seal. The maximal inner diameter of a through hole 40 may have a range of 20-60 mm. Therefore, the air conduction capability of the through holes 40 is significantly improved, so that the air can enter the cabinet instantaneously through the through holes 40 when the door body is opened, thereby shortening the time for opening the door body.

Further, in the present embodiment, one end of the fixed plate 202 is provided with a fin 2021 formed by bending an end portion of the fixed plate 202 toward one side of the barb 201. When the door seal of the present embodiment is mounted on the liner of the door body, the fin 2021 is placed on the liner of the door body so as to cover the edge of the liner of the door body, thereby improving the external appearance of the door body.

Further, in the present embodiment, the right side wall provided with the connection portion 30 of the sealing air chamber portion 10 extends in a direction away from the fixed plate 202 with a blade edge 101. The blade edge 101 and an outer surface of the right side wall of the sealing air chamber portion 10 form a smooth surface for the user to clean the door seal conveniently.

Further, in the present embodiment, the sealing air chamber portion 10 includes an inner air chamber 102 and outer air chambers 103 at both sides of the inner air chamber 102. Several support ribs are arranged within the inner air chamber 102 and the outer air chambers 103 respectively. Specifically, three horizontal support ribs 1021 are provided at intervals from top to bottom within the inner air chamber 102, dividing the inner side air chamber 102 into three sub air chambers. One horizontal support rib 1031 is provided within the outer side air chamber 103, dividing the outer side air chamber 103 into two sub air chambers. An ear-shaped air chamber 104 is also provided outside the left outer air chamber 103, and an outer side surface of the ear-shaped air chamber 104 is an arc surface. Therefore, the sealing air chamber portion 10 of the present embodiment has better stability and elasticity, and can ensure a good sealing of the door seal.

In summary, by connecting the fixed plate 202 with the sealing air chamber portion 10 with the connection portion 30, the door seal of the present embodiment form a gap between the fixed plate 202 and the sealing air chamber portion 10. The through holes 40 are arranged on the fixed plate 202 at a position close to the connection portion 30 without affecting the appearance, and when the door body is closed, the through holes 40 are pressed and blocked by the sealing air chamber portion 10 without affecting the sealing. Therefore the size of a through hole 40 can be set to a large size as required, so as to achieve a good air conduction effect, so that the air can enter the cabinet instantaneously when the door body is opening, thereby shortening the time for opening the door body and improving the experience for the user.

The embodiments of the present disclosure also provide a refrigeration container that has the above-described door seal of the embodiments of the present disclosure. The refrigeration container of the present embodiment may be a refrigerator or a freezer.

Finally, it should be noted that the embodiments above are only used to illustrate rather than to limit the technical solutions of the present disclosure; although the present disclosure has been described in detail with reference to the foregoing embodiments, those of ordinary skill in the art should understand that they can still modify the technical solutions described in the foregoing embodiments, or equivalently replace some of the technical features therein; and these modifications or replacements do not depart the essence of the corresponding technical solutions from the spirit and scope of the technical solutions of the various embodiments of the present disclosure.

### INDUSTRIAL APPLICABILITY

The present disclosure provides a door seal, including a sealing air chamber portion and a latching tongue portion. The latching tongue portion is configured to be connected to the door body. The latching tongue portion includes a barb and a fixed plate for connecting the barb with the sealing air chamber portion. The sealing air chamber portion is connected to the fixed plate through a connection portion, and a gap is formed between the sealing air chamber portion and the fixed plate. Several through holes are provided on the fixed plate at a position between the barb and the connection portion. The fixed plate is connected to the sealing air chamber portion through the connection portion, a gap is formed between the fixed plate and the sealing air chamber portion, and the through holes are provided on the fixed plate at the position between the barb and the connection portion, and therefore when the door body is closed, the sealing air bag portion of the door seal is pressed and deformed to press against the fixed plate, and the through holes on the fixed plate are blocked, so that the sealing effect is not affected; when the door body is opening, the sealing air chamber portion is separated from the fixed plate by the movement of the door body under the negative pressure, so that the air can enter the cabinet via the through holes in the fixed plate and the gap between the fixed plate and the sealing air chamber portion, which balances the pressures inside and outside the cabinet, and thus the door body can be easily opened. Since the through holes are arranged on the fixed plate without affecting the appearance, and the through holes are pressed and blocked by the sealing air chamber portion without affecting the sealing when the door body is closed, the size of the through holes can be set to a large size as required, so as to achieve a good air conduction effect, so that the air can enter the cabinet instantaneously when the door body is opened, thereby shortening the time for opening the door body and improving the experience for the user. The present invention has great applicability.

## Claims

1. A door seal, **characterized in** comprising a sealing air chamber portion and a latching tongue portion; wherein the latching tongue portion is configured to be connected to a door body, and comprises a barb and a fixed plate for connecting the barb with the sealing air chamber portion; the sealing air chamber portion is connected to the fixed plate through a connection portion, and a gap is formed between the sealing air chamber portion and the fixed plate; and a plurality of through holes are provided on the fixed plate at a position between the barb and the connection portion.

2. The door seal of claim 1, **characterized in that** the connection portion is at a position close to a side wall of the sealing air chamber portion.

3. The door seal of claim 1, **characterized in that** the through holes are elongated or U-shaped.

4. The door seal of claim 1, **characterized in that** the through hole has a maximal inner diameter with a range of 20-60 mm.

5. The door seal of claim 1, **characterized in that** one end of the fixed plate is provided with a fin formed by bending an end portion of the fixed plate toward one side of the barb.

6. The door seal of claim 1, **characterized in that** one side wall of the sealing air chamber portion extends in a direction away from the fixed plate with a blade edge.

7. The door seal of claim 1, **characterized in that** the sealing air chamber portion comprises an inner air chamber and outer air chambers at both sides of the inner air chamber; and a plurality of support ribs is arranged within the inner air chamber and the outer air chambers respectively.

8. The door seal of claim 7, **characterized in that** the sealing air chamber portion further comprises an ear-shaped air chamber provided outside the outer air chamber, and an outer side surface of the ear-shaped air chamber is an arc surface.

9. A refrigeration container, **characterized in** comprising the door seal of any of claims 1 to 8.
